# FASCICULE DE BREVET EUROPEEN

(11) **EP 1 010 650 B1**
(45) Date de publication et mention de la délivrance du brevet: **13.08.2003**
(21) Numéro de dépôt: 99403165.6
(22) Date de dépôt: 16.12.1999
(51) Int. Cl.: B65G 69/18, B65G 69/20

(54) **Dispositif d'abattage de poussières contenues dans un produit en vrac**
Vorrichtung zum Niederschlagen von Staub in Schüttgut
Apparatus for laying dust in bulk material

(30) Priorité: 18.12.1998 FR 9816035
(43) Date de publication de la demande: 21.06.2000
(73) Titulaire: EXEL INDUSTRIES, 51200 Epernay (FR)
(72) Inventeur: Ballu, Patrick, 51100 Reims (FR)
(74) Mandataire: Colas, Jean-Pierre

(56) Documents cités:
- DE-A- 3 316 030
- FR-A- 2 684 972
- US-A- 2 973 740

## Description

L'invention concerne un dispositif d'abattage des poussières contenues dans un écoulement de produits en vrac lors de leur transfert, conformément au préambule de la revendication 1. Un tel dispositif est connu du US 2 973 740.

Le transfert peut être effectué pour remplir ou vider un silo, un engin de transport, comme un wagon de chemin de fer, un camion ou un bateau céréalier, ou encore un tas de stockage. L'invention trouve une application particulièrement utile dans le cas des cellules d'un silo de stockage de céréales, de manches de déversement dans un lieu de stockage, ou de transports.

On sait que la présence de poussières dans les produits en vrac peut être extrêmement gênante, car les poussières qui se dégagent du produit pendant le transfert se dispersent en étant en suspension dans l'air; elles peuvent ainsi contribuer à détériorer la salubrité du local de stockage ou de l'environnement. Dans le cas des silos à grains, les poussières peuvent même créer des risques d'incendie ou d'explosion, similaires à ceux du "poussier" de charbon par exemple.

Dans le dispositif d'abattage de poussières décrit dans le document antérieur précité, le cône divergent est placé dans un carter qui, vu dans le sens d'écoulement du produit, se rétrécit jusqu'à ce que le produit pénètre dans une canalisation raccordée au dispositif d'abattage. Ainsi, la nappe de produit formée en aval du cône divergent est contrainte à se rétrécir en suivant la surface interne de ce carter. Il en résulte un freinage de la progression de la nappe, ce qui réduit le débit de passage du produit dans le dispositif d'abattage. Par ailleurs, la structure de ce dispositif d'abattage antérieur s'encrasse facilement, car au cours de sa progression, le produit reste enfermé dans un espace de plus en plus petit. Enfin, le dispositif de pulvérisation est logé à l'intérieur du cône de sorte qu'il ne peut directement pulvériser sur l'enveloppe externe de la nappe, mais seulement l'arroser à partir de l'intérieur du cône divergent. On peut également observer que ce dispositif antérieur freine l'écoulement du produit en aval de la zone de pulvérisation, qui peut être entièrement envahie de produit, lorsque l'écoulement aval est stoppé.

L'invention a pour but de fournir un dispositif d'abattage des poussières contenues dans un produit en vrac qui permette de remédier aux inconvénients du dispositif d'abattage de poussière antérieur.

Elle a donc pour objet un dispositif d'abattage de poussières présentant les caractéristiques définies dans la partie caractérisante de la revendication 1.

Grâce à ces caractéristiques, on obtient un abattage particulièrement efficace par pulvérisation directe d'un liquide humectant sur la nappe tubulaire de produit en vrac, sans que la nappe soit freinée dans sa progression. Ainsi, le dispositif peut travailler avec un débit élevé et son encrassement est réduit au minimum. Enfin, il devient possible de pulvériser du liquide humectant sur l'enveloppe extérieure de la nappe de produit.

D'autres caractéristiques avantageuses du dispositif d'abattage de poussières selon l'invention résultent des sous-revendications.

D'autres caractéristiques et avantages de l'invention apparaîtront au cours de la description qui va suivre, donnée uniquement à titre d'exemple et faite en se référant au dessin annexé sur lequel:
- la figure 1 représente une vue en perspective d'un dispositif d'abattage de poussières selon un premier mode de réalisation de l'invention;
- la figure 2 est une vue en coupe verticale de ce dispositif mis en place dans le plafond d'un silo à grains, au-dessus de l'une des cellules de celui-ci; et
- la figure 3 est une vue en perspective d'un second mode de réalisation de l'invention.

En se référant maintenant au dessin, on voit que selon un exemple préféré de réalisation de l'invention, destiné plus particulièrement à être appliqué dans le cas où le produit en vrac est une denrée agricole et plus spécialement constitué de céréales, le dispositif d'abattage comprend un carter 1 de révolution comportant un embout cylindrique supérieur d'insertion 2 se rétrécissant éventuellement vers le haut à très faible pente. Cet embout 2 est destiné à être introduit avec un ajustement serré, dans un conduit 3 d'amenée du produit en vrac. Dans l'exemple non limitatif décrit, ce conduit 3 peut être celui prévu au-dessus de chacune des cellules de stockage d'un silo à grains, par exemple et dans ce cas le dispositif d'abattage est placé de manière que son axe soit vertical, ou incliné sur la verticale.

L'embout d'insertion 2 est raccordé à une partie intermédiaire 4 du carter 1 de forme tronconique et divergente dans le sens d'écoulement. Cette partie intermédiaire 4 est raccordée à son tour à une partie inférieure 5 du carter 1, également de forme tronconique, de pente inverse par rapport à la partie 4, se rétrécissant donc vers l'aval. Selon une variante, la partie inférieure 5 peut éventuellement être omise.

Le carter 1 forme ainsi un volume de déversement du produit en vrac permettant de le conduire du conduit d'amenée 3 vers le volume de la cellule du silo au-dessus de laquelle le dispositif d'abattage est prévu.

Lorsque, comme représenté, le dispositif d'abattage doit être fixé contre le plafond P du silo, une collerette de fixation 6 s'étendant horizontalement est avantageusement prévue autour de la partie d'insertion 3 afin de permettre cette fixation. Pour assurer la position angulaire du dispositif autour de son axe vertical, il est prévu également une patte de fixation 7, attachée à un goujon ou analogue (non représenté) ancré dans le plafond P du silo.

Des entretoises de support 9 sont prévues dans l'embout d'insertion 2 en s'étendant radialement vers l'intérieur; de préférence, trois entretoises sont décalées l'une par rapport à l'autre de 120° autour de l'axe du dispositif. Ces entretoises qui ont de préférence une section profilée de manière à ne pas gêner l'écoulement du produit (à peu près celle d'une aile d'avion), supportent un organe central de montage comprenant notamment une broche creuse axiale 10 dont l'extrémité supérieure est fermée par une pointe 10a dirigée vers le haut pour faciliter le passage du produit.

L'une des entretoises 9 supporte en outre une double tubulure 11 formée de deux tronçons de tube coaxiaux dont l'un 11a intérieur est raccordé à une source de liquide sous pression (non représentée), et dont l'autre 11b extérieur est connecté à une source d'air sous pression (également non représentée).

Sur la broche creuse 10 est vissé un manchon 12 en étant bloqué par un écrou 13. La broche creuse porte une ou plusieurs buses de pulvérisation 14 à son extrémité inférieure.

Des trous 15, trois par exemple disposés à 120° l'un de l'autre, sont pratiqués dans la broche 10 et servent d'embouchures de la sortie d'air.

La ou les buses de pulvérisation 14 sont alimentées par une canalisation 16 interne à la broche 10 et formant un prolongement du tronçon de tube 11a. Cette canalisation 16 présente un diamètre extérieur tel qu'un passage d'air reste libre autour d'elle, ce passage communiquant avec le tronçon de tube 11b et débouchant dans le volume interne du carter 1 à travers les trous 15.

Des buses de pulvérisation 17, de préférence externes au carter 1, sont prévues sur la périphérie de la partie inférieure 5 de celui-ci ou, le cas échéant, de la partie intermédiaire 4. Ces buses communiquent avec le tronçon de tube 11a d'alimentation en liquide de pulvérisation par une canalisation non représentée, ou elles sont alimentées par une canalisation distincte (également non représentée) permettant ainsi des réglages différents de pression et de débit dans les buses 14 et 17.

Le liquide de pulvérisation peut être de l'eau rendue mouillante par adjonction d'un réducteur de tension superficielle qui est d'origine végétale, de qualité alimentaire ou compatible alimentaire, si le produit en vrac est de nature alimentaire. La quantité d'additif peut être choisie, de préférence et d'expérience, entre 0,05% et 2% de la quantité d'eau pulvérisée. La quantité d'eau peut être choisie, de préférence et d'expérience, entre 0,05% et 2% de la quantité de produit passant dans le dispositif d'abattage par unité de temps.

Il est à noter que d'autres liquides humectants peuvent être utilisés, tels que des extraits de produits agricoles consommables, des huiles minérales compatibles alimentaires ou des huiles d'origine végétale, l'huile de colza étant un exemple non limitatif d'un tel liquide. Dans ce cas, la fourchette de la proportion de liquide humectant par rapport à la quantité de produit déversée peut être la même que dans le cas de l'eau en tant que produit humectant.

Un cône d'entrée convergent 8 ou goulotte de guidage du produit peut être fixé à l'intérieur de l'embout d'insertion 2, comme cela est représenté à titre d'exemple sur le dessin. Cette goulotte 8 présente la forme d'un tronc de cône convergent dans le sens de l'écoulement du produit et s'étend jusqu'à la hauteur de la jonction entre l'embout 2 et la partie intermédiaire 4 du carter 1. Un second cône 18 divergent dans le sens de l'écoulement du produit est fixé autour du manchon 12. Sa position peut donc être réglée par rapport à celle de l'embout 2 ou le cas échéant de la goulotte 8, par l'ajustement du manchon 12 sur la broche 10. Ce réglage permet de déterminer la dimension radiale libre d perpendiculaire à la surface du cône 18 et ainsi le passage annulaire entre le bord inférieur de l'embout 2 ou de la goulotte 8 et le cône 18. De la sorte, l'épaisseur de la nappe annulaire de produit s'écoulant dans le dispositif d'abattage peut être ajustée avec précision. Le cône 18 peut également servir à assurer une aspiration naturelle de l'air à travers les orifices 15 ce qui avantageusement peut éviter une mise sous pression de cet air.

Le fonctionnement de ce dispositif d'abattage de poussières est le suivant.

Le produit en vrac est amené par gravité ou propulsé mécaniquement à travers le conduit d'amenée 3 et reçu dans l'embout 2 ou dans la goulotte convergente 8 où il est centré par rapport à l'axe du dispositif d'abattage.

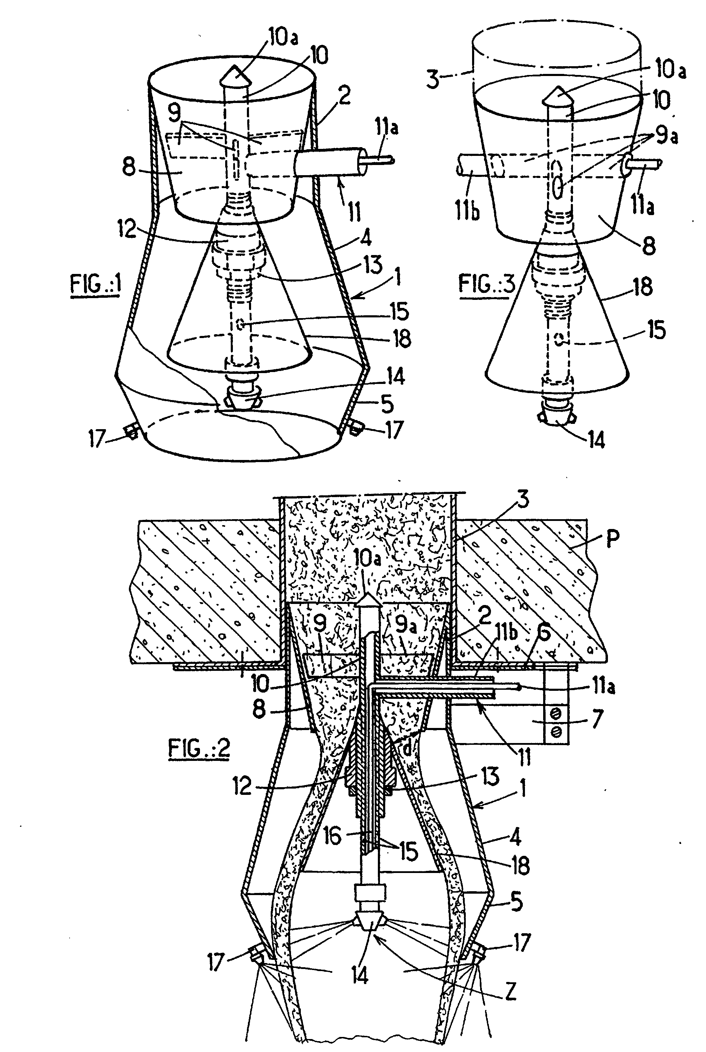

Puis, il tombe sur le cône divergent de division 18 sur la surface extérieure duquel se forme une nappe annulaire de produit d'épaisseur réglable, la figure 2 illustrant la position du cône correspondant à l'épaisseur la plus faible pouvant être obtenue. Puis le produit accélère par gravité, ce qui contribue à diminuer progressivement l'épaisseur de la nappe et à améliorer sa pénétration par le liquide pulvérisé.

Après avoir passé le bord inférieur du cône de division 18, la nappe de produit reçoit une première pulvérisation de liquide intérieure à la nappe par l'intermédiaire de la ou des buses centrales 14, pulvérisation dont les très fines gouttelettes humidifient une première fois les poussières en suspension dans le volume interne de la nappe annulaire de produit. Comme la ou les buses 14 pulvérisent dans une zone Z située en aval du cône 18, la nappe de produit est directement humidifiée avec un rendement élevé en produit pulvérisé.

Puis, en sortant de la partie inférieure 5 ou, le cas échéant la partie intermédiaire 4, du carter 1, la nappe conserve sa forme annulaire creuse, tout en recevant une seconde humidification par les buses périphériques 17 dirigées vers l'enveloppe externe de la nappe de produit où les poussières sont également humectées. Le courant d'air amené à travers les orifices 15 permet de gaver l'espace interne de la nappe annulaire d'air de manière à entraîner les gouttelettes de liquide humectant à travers la nappe et favoriser ainsi le captage des poussières, tout en évitant l'encrassement du cône 18 et des buses 14 par les poussières humidifiées s'y déposant par turbulence.

Il est à noter que, afin d'augmenter la surface de contact de la pulvérisation avec les poussières du produit en vrac, les sections transversales des différents cônes du dispositif et, éventuellement de façon conjuguée du carter, peuvent être circulaires, ovales, en étoile, ou polygonales, rectangulaires par exemple, ces exemples n'étant évidemment pas limitatifs.

L'insufflation d'air peut présenter un avantage particulier dans un silo à grains par exemple où l'air arrivant par le conduit 11, forcé ou par aspiration naturelle du cône 18, peut provenir de l'intérieur même du silo. Cela évite une arrivée d'air extérieur excessive et surtout contribue à recycler les poussières qui, précédemment, n'avaient pas été captées par le dispositif et restaient encore en suspension dans l'air du silo.

Il est même envisageable d'accélérer le recyclage de l'air du silo en utilisant comme source d'air sous pression à brancher sur le tronçon de tube 11b un injecteur d'air de type venturi dont l'air moteur est de l'air comprimé, pour abattre les poussières restées en suspension, même après le remplissage du silo, c'est-à-dire sans circulation de grains dans le dispositif. Ceci permet également au dispositif de fonctionner en dépoussiérage de l'air du silo, même en l'absence d'écoulement de produit.

Pendant sa progression dans le dispositif d'abattage, l'épaisseur de la nappe de produit peut librement évoluer et la nappe n'est pas en contact avec les parties 4 ou 5 du carter extérieur 1 du moins jusqu'à ce qu'elle ait quitté la zone Z. Elle ne subit aucun rétrécissement, ni freinage et peut donc progresser avec un débit élevé et même accélérer sa vitesse sous l'effet de la pesanteur ce qui diminue son épaisseur.

Selon une variante de réalisation qui n'est pas représentée au dessin, il est possible d'omettre le cône d'entrée convergeant 8, le cône divergent 18 devant alors être rendu solidaire convenablement de l'embout 2 ou de la conduite 3, ce qui ne posera aucun problème à l'homme de métier.

Le dispositif d'abattage selon l'invention peut être complété par des moyens de protection contre le gel et un asservissement pilotant la pulvérisation en fonction de la présence ou de l'absence d'un produit en vrac dans la goulotte 8. Ces moyens auxiliaires pouvant être réalisés sans difficulté par l'homme de métier, ils n'ont pas été décrits en détail.

La figure 3 représente en perspective un autre mode de réalisation de l'invention comprenant le cône d'entrée convergent 8, le cône divergent 18, un dispositif de montage central formé essentiellement par la broche creuse 10 et le manchon 12 portant le cône 18 et la ou les buses de pulvérisation centrale 14. On remarquera que dans ce cas, les ailettes 9a qui forment le lien entre le premier cône 8 et la broche 10 sont creuses de manière à pouvoir conduire respectivement le liquide humectant vers la canalisation 16, et l'air à travers l'espace ménagé autour de celle-ci, respectivement à partir des tronçons 11a et 11b. On notera également que dans cette variante, on peut utiliser un embout tel que l'embout 2, muni ou non du cône 8. Par ailleurs, le carter 1 est omis.

Cependant, lorsque le carter 1 est utilisé, avec ou sans son prolongement 5, il permet de faciliter d'une part la fixation des buses périphériques 17, ainsi que leur protection et d'autre part l'orientation de la nappe de produit, sans divergence excessive, pour faciliter la répartition du produit sur le tas de stockage ou dans le véhicule de transport.

Le dispositif d'abattage selon la figure 3 est conçu pour pouvoir être monté au bout d'une trompe de déversement du produit en vrac, ce qui autorise la mobilité du dispositif pour permettre le déversement dans un engin de manutention, comme un wagon de chemin de fer, un camion ou un bateau céréalier, ou encore sur un tas de stockage de produit. Il peut alors être manipulé à la main ou être monté au bout d'une perche de manutention ou d'un bras télécommandé.

## Revendications

1. Dispositif d'abattage des poussières contenues dans un écoulement de produits en vrac lors de leur transfert, ce dispositif d'abattage comprenant un cône divergent (18) sur la surface extérieure duquel est dirigé ledit produit à partir d'un conduit d'amenée pour former une nappe tubulaire de produit, un dispositif de montage (10, 12) pour maintenir ledit cône dans le courant de produit sortant dudit conduit d'amenée et au moins un dispositif de pulvérisation (14, 17) d'un liquide humectant fixé audit dispositif de montage (10, 12) et comprenant au moins une buse centrale (14) placée dans une zone d'humidification (Z) pour humecter la partie de l'enveloppe interne de ladite nappe de produit située en aval dudit cône,
- **caractérisé en ce que** ladite buse centrale (14) est placée de manière à pulvériser en aval dudit cône (18), et **en ce que** la structure du dispositif d'abattage est telle que l'épaisseur de ladite nappe tubulaire dudit courant de produit puisse librement s'établir jusqu'à ce que ce courant quitte ladite zone d'humidification (Z), la nappe conservant ensuite sa forme annulaire creuse.

2. Dispositif d'abattage suivant la revendication 1, **caractérisée en ce qu'**il comprend un carter extérieur (1) enveloppant coaxialement ledit cône divergent (18) et ladite zone d'humidification (Z), et **en ce que** la forme de ce carter est telle que ladite nappe en soit dégagée au moins jusqu'à ce que ledit courant de produit quitte ladite zone (Z).

3. Dispositif d'abattage suivant l'une quelconque des revendications 1 et 2, **caractérisé en ce que** ledit dispositif de pulvérisation comprend une pluralité de buses de projection (17) montées à la périphérie du carter (1) de manière à pouvoir humecter l'extérieur de ladite nappe de produit.

4. Dispositif d'abattage suivant l'une quelconque des revendications précédentes, **caractérisé en ce qu'**il comprend également des moyens (11b, 10, 15) pour amener de l'air à l'intérieur de ladite nappe tubulaire de produit dans ladite zone d'humidification (Z) située en aval dudit cône divergent (18).

5. Dispositif d'abattage suivant la revendication 4, **caractérisé en ce que** ledit air est amené par la dépression naturelle créée au niveau dudit cône divergent (18) par l'écoulement dudit produit en vrac.

6. Dispositif d'abattage suivant la revendication 4, **caractérisé en ce qu'**il est prévu des moyens pour injecter ledit air sous pression dans ladite zone d'humidification (Z).

7. Dispositif d'abattage suivant l'une quelconque des revendications 2 à 6, **caractérisé en ce que** ledit carter (1) présente, considéré dans le sens de l'écoulement du produit, une première partie (2, 4) au moins partiellement divergent, de pente à peu près égale à celle dudit cône divergent (18) et raccordée audit conduit d'amenée (3), ledit cône divergent (18) étant monté dans ladite première partie (2, 4) du carter (1).

8. Dispositif suivant l'une quelconque des revendications 2 à 6, **caractérisé en ce que** ledit carter (1) présente, considéré dans le sens de l'écoulement du produit, une partie de sortie tronconique (5) convergente.

9. Dispositif d'abattage suivant l'une quelconque des revendications 2 à 8, **caractérisé en ce qu'**il comprend également un cône d'entrée (8) solidaire dudit carter (1) et placé à la sortie dudit conduit d'amenée (3) en amont dudit cône divergent (18), ce cône d'entrée (8) ayant une pente inverse de celui dudit cône divergent (18).

10. Dispositif d'abattage suivant la revendication 9, **caractérisé en ce que** des moyens (12, 13) sont prévus pour régler la position axiale relative desdits cônes divergent et d'entrée (8, 18) pour permettre un réglage de l'épaisseur de ladite nappe tubulaire de produit.

11. Dispositif d'abattage suivant l'une quelconque des revendications 9 et 10, **caractérisé en ce que** ledit cône divergent (18) et/ou ledit cône d'entrée (8) présentent en section transversale une forme circulaire, ovale, en étoile, ou polygonale, rectangulaire par exemple.

12. Dispositif d'abattage suivant l'une quelconque des revendications 2 à 11, **caractérisé en ce que** ledit carter (1) présente une section transversale de forme circulaire, ovale, en étoile, ou polygonale, rectangulaire par exemple.

13. Dispositif d'abattage suivant l'une quelconque des revendications précédentes, **caractérisé en ce que** ledit dispositif de montage comprend un organe de maintien (10, 12) comportant une broche centrale (10) et un manchon (12) monté autour de ladite broche (10) et sur lequel est monté ledit cône divergent (18).

14. Dispositif d'abattage suivant la revendication 13, **caractérisé en ce que** ladite ou lesdites buse(s) de pulvérisation centrale (14) sont montées à l'extrémité inférieure de ladite broche (10).

15. Dispositif d'abattage suivant la revendication 14, **caractérisé en ce qu'**une canalisation (16) pour ledit liquide humectant est disposée dans ledit organe de maintien (10, 12) et communique d'une part avec ladite ou lesdites buse(s) de pulvérisation centrale (14) et d'autre part avec une source de liquide humectant sous pression.

16. Dispositif d'abattage suivant la revendication 15, lorsqu'elle dépend de la revendication 4, 5 ou 6, **caractérisé en ce que** ledit manchon (12) est pourvu d'orifices de sortie d'air (15) dans une zone située dans ledit cône divergent (18), et l'espace délimité dans ledit organe de maintien autour de ladite canalisation (16) communique avec une source d'air.

17. Dispositif suivant l'une quelconque des revendications 12 à 15, **caractérisé en ce que** ledit organe de maintien (10, 12) est fixé par l'intermédiaire d'ailettes radiales creuses (9a) servant à véhiculer ledit liquide humectant.

18. Dispositif suivant l'une quelconque des revendications 12 à 16, lorsqu'elles dépendent de l'une quelconque des revendications 4, 5 ou 6, **caractérisé en ce que** ledit organe de maintien (10, 12) est fixé par l'intermédiaire d'ailettes radiales creuses (9a) servant à véhiculer l'air amené à l'intérieur de ladite nappe.

19. Dispositif d'abattage suivant l'une quelconque des revendications précédentes, **caractérisé en ce que** ledit liquide humectant est de l'eau additionnée d'un agent mouillant, de préférence d'origine végétale, de qualité alimentaire ou compatible alimentaire.

20. Dispositif d'abattage suivant l'une quelconque des revendications 1 à 18, **caractérisé en ce que** ledit liquide humectant est un extrait de produit alimentaire, une huile minérale compatible alimentaire ou une huile d'origine végétale et en particulier l'huile de colza.

21. Application d'un dispositif d'abattage suivant l'une quelconque des revendications précédentes dans un silo à grains, **caractérisé en ce qu'**il est monté au-dessus d'une cellule de ce silo.

22. Application suivant la revendication 21 dans la quelle le dispositif d'abattage présente les caractéristiques de l'une quelconque des revendications 4 à 20, **caractérisé en ce que** l'air aspiré ou injecté dans la zone d'humidification (Z) située en aval dudit cône divergeant (18) provient de l'intérieur dudit silo.

23. Application d'un dispositif d'abattage suivant l'une quelconque des revendications 1 à 20, **caractérisé en ce qu'**il est monté en bout d'un conduit de transfert de produit pour être utilisable sur une aire de stockage ou pour remplir un véhicule de transport.

## Patentansprüche

1. Vorrichtung zum Niederschlagen von Stäuben, enthalten in einem Abfluß von Schüttgütern während ihrer Umladung, wobei diese Niederschlagvorrichtung einen auseinanderlaufenden Konus (18) umfasst, auf dessen äußere Oberfläche das Produkt aus einer Zufuhrleitung geleitet wird, um eine röhrenförmige Mantelfläche des Produktes zu bilden, eine Haltevorrichtung (10,12) um den Konus in dem Strom des aus der Zufuhrleitung herauskommenden Produktes zu halten, und mindestens eine Vorrichtung zum Versprühen (14, 17) einer Befeuchtungsflüssigkeit, die an dieser Haltevorrichtung (10, 12) befestigt ist und mindestens eine zentrale Düse (14) enthält, angeordnet in einer Befeuchtungszone (Z), um den Teil der inneren Umhüllung der Mantelfläche aus Produkt zu besprengen, der sich unterhalb des Konus befindet,
- **dadurch gekennzeichnet, daß** die zentrale Düse (14) so angeordnet ist, daß sie stromabwärts von diesem Konus (18) versprüht, und daß die Anordnung der Vorrichtung zum Niederschlagen derart ist, daß die Dicke der röhrenförmigen Mantelfläche des Produktstroms sich frei aufbauen kann, bis dieser Strom die Befeuchtungszone (Z) verlässt, so daß die Mantelfläche danach ihre ringförmige, hohle Gestalt behält.

2. Vorrichtung zum Niederschlagen nach Anspruch 1, **dadurch gekennzeichnet, daß** sie ein äußeres Gehäuse (1) umfasst, das koaxial den auseinanderlaufenden Konus (18) und die Befeuchtungszone (Z) umhüllt, und daß die Form dieses Gehäuses so ist, daß die Mantelfläche es mindestens so lange nicht berührt, bis der Produktstrom die Zone (Z) verlässt.

3. Vorrichtung zum Niederschlagen nach einem der Ansprüche 1 und 2, **dadurch gekennzeichnet, daß** die Vorrichtung zum Versprühen eine Vielzahl von Spritzdüsen (17) enthält, die derart am Rand des Gehäuses (1) angebracht sind, daß sie die Außenseite der Mantelfläche aus Produkt besprengen können.

4. Vorrichtung zum Niederschlagen nach einem der vorhergehenden Ansprüche, **dadurch gekennzeichnet, daß** sie außerdem Mittel (11b, 10, 15) zur Zufuhr von Luft in das Innere der röhrenförmigen Mantelfläche aus Produkt in der Befeuchtungszone (Z), die sich unterhalb des auseinanderlaufenden Konus (18) befindet, umfasst.

5. Vorrichtung zum Niederschlagen nach Anspruch 4, **dadurch gekennzeichnet, daß** die Luft durch den natürlichen Unterdruck, der auf der Höhe des auseinanderlaufenden Konus (18) durch das Herabströmen des Produktes erzeugt wird, zugeführt wird.

6. Vorrichtung zum Niederschlagen nach Anspruch 4, **dadurch gekennzeichnet, daß** sie mit Mitteln zum Einblasen der Luft unter Druck in die Befeuchtungszone (Z) versehen ist.

7. Vorrichtung zum Niederschlagen nach einem der Ansprüche 2 bis 6, **dadurch gekennzeichnet, daß** das Gehäuse (1), in Richtung des Abflusses des Produktes gesehen, einen mindestens teilweise auseinanderlaufenden ersten Teil (2, 4) aufweist, mit einer Schräge ungefähr gleich der des auseinanderlaufenden Konus (18), der mit der Zufuhrleitung (3) verbunden ist, wobei der auseinanderlaufende Konus (18) an dem ersten Teil (2,4) des Gehäuses (1) angebracht ist.

8. Vorrichtung nach einem der Ansprüche 2 bis 6, **dadurch gekennzeichnet, daß** das Gehäuse (1), in Richtung des Abflusses des Produktes gesehen, einen stumpfkegelförmig zusammenlaufenden Auslaufteil (5) aufweist.

9. Vorrichtung zum Niederschlagen nach einem der Ansprüche 2 bis 8, **dadurch gekennzeichnet, daß** sie außerdem einen Einlaufkonus (8) umfasst, zusammenhängend mit dem Gehäuse (1) und angeordnet am Auslauf der Zufuhrleitung (3) oberhalb des auseinanderlaufenden Konus (18), wobei dieser Einlaufkonus (8) eine zu derjenigen des auseinanderlaufenden Konus (18) entgegengesetzte Schräge aufweist.

10. Vorrichtung zum Niederschlagen nach Anspruch 9, **dadurch gekennzeichnet, daß** Mittel (12, 13) zum Einstellen der axialen Lage zueinander des auseinanderlaufenden Konus und des Einlaufkonus (8, 18) vorgesehen sind, um eine Einstellung der Dicke der röhrenförmigen Mantelfläche aus Produkt zu erlauben.

11. Vorrichtung zum Niederschlagen nach einem der Ansprüche 9 und 10, **dadurch gekennzeichnet, daß** der auseinanderlaufende Konus (18) und/oder der Einlaufkonus (8) im Querschnitt eine kreisförmige, ovale, sternförmige oder vieleckige, beispielsweise rechteckige, Form aufweisen.

12. Vorrichtung zum Niederschlagen nach einem der Ansprüche 2 bis 11, **dadurch gekennzeichnet, daß** das Gehäuse (1) einen kreisförmigen, ovalen, sternförmigen oder vieleckigen, beispielsweise rechteckigen, Querschnitt aufweist.

13. Vorrichtung zum Niederschlagen nach einem der vorhergehenden Ansprüche, **dadurch gekennzeichnet, daß** die Haltevorrichtung ein Element zum Aufrechthalten (10, 12) enthält, umfassend einen zentralen Zapfen (10) und eine um diesen Zapfen (10) herum angeordnete Hülse (12), auf dem der auseinanderlaufende Konus (18) angebracht ist.

14. Vorrichtung zum Niederschlagen nach Anspruch 13, **dadurch gekennzeichnet, daß** die zentralen(n) Düse(n) (14) zum Versprühen an dem unteren Ende des Zapfens (10) angebracht sind.

15. Vorrichtung zum Niederschlagen nach Anspruch 14, **dadurch gekennzeichnet, daß** eine Rohrleitung (16) für die Befeuchtungsflüssigkeit in dem Element zum Aufrechthalten (10, 12) angebracht ist, die einerseits mit der/den zentralen Düse(n) zum Versprühen und andererseits mit einer unter Druck stehenden Quelle der Befeuchtungsflüssigkeit verbunden ist.

16. Vorrichtung zum Niederschlagen nach Anspruch 15, wenn sie von dem Anspruch 4, 5, oder 6 abhängt, **dadurch gekennzeichnet, daß** die Hülse (12) in einem in dem auseinanderlaufenden Konus (18) befindlichen Gebiet mit Austrittsmundlöchern für Luft (15) versehen ist, und daß der um die Rohrleitung (16) herum in dem Element zum Aufrechthalten eingeschlossene Raum mit einer Quelle von Luft verbunden ist.

17. Vorrichtung zum Niederschlagen nach einem der Ansprüche 12 bis 15, **dadurch gekennzeichnet, daß** das Element zum Aufrechthalten (10, 12) mittels radialer hohler Rippen (9a) befestigt ist, die zum Weiterleiten der Befeuchtungsflüssigkeit dienen.

18. Vorrichtung zum Niederschlagen nach einem der Ansprüche 12 bis 16, wenn sie von einem der Ansprüche 4, 5 oder 6 abhängen, **dadurch gekennzeichnet, daß** das Element zum Aufrechthalten (10, 12) mittels radialer hohler Rippen (9a) befestigt ist, die zum Weiterleiten der in das Innere der Mantelfläche zugeführten Luft dienen.

19. Vorrichtung zum Niederschlagen nach einem der vorhergehenden Ansprüche, **dadurch gekennzeichnet, daß** die Befeuchtungsflüssigkeit Wasser ist, dem ein Benetzungsmittel, vorzugsweise pflanzlichen Ursprungs, von Nahrungsmittelqualität oder mit Nahrung verträglich, zugesetzt ist.

20. Vorrichtung zum Niederschlagen nach einem der Ansprüche 1 bis 18, **dadurch gekennzeichnet, daß** die Befeuchtungsflüssigkeit ein Auszug aus einem Nahrungsmittel, ein mit Nahrung verträgliches Mineralöl oder ein Öl pflanzlichen Ursprungs ist, insbesondere Rapsöl.

21. Verwendung einer Vorrichtung zum Niederschlagen nach einem der vorhergehenden Ansprüche in einem Getreidesilo, **dadurch gekennzeichnet, daß** sie über einer Zelle dieses Silos angebracht ist.

22. Verwendung gemäß Anspruch 21, bei der die Vorrichtung zum Niederschlagen die Merkmale nach einem der Ansprüche 4 bis 20 aufweist, **dadurch gekennzeichnet, daß** die in die unterhalb des auseinanderlaufenden Konus (18) angeordnete Befeuchtungszone (Z) angesaugte oder hineingepresste Luft aus dem Inneren des Silos stammt.

23. Verwendung einer Vorrichtung zum Niederschlagen nach einem der Ansprüche 1 bis 20, **dadurch gekennzeichnet, daß** sie am Ende einer Zufuhrleitung für Produkt angebracht ist, um auf einer Speichertenne oder zum Füllen eines Transportfahrzeugs verwendbar zu sein.

## Claims

1. A device for laying dust contained in a flow of bulk product during transfer thereof, said device comprising a divergent cone (18) onto whose outside surface said product is directed from a feed pipe to form a tubular layer of product, a mounting device (10, 12) for holding said cone in the flow of product leaving said feed pipe and at least one device (14, 17) fixed to said mounting device (10, 12) for spraying a moistening liquid, wherein said spray device comprises at least one central nozzle (14) located in a moistening area (Z) for moistening the part of the inside envelope of said product layer which is located downstream of said cone,
**characterized in that** said central nozzle (14) is located so as to spray downstream of said cone (18), and **in that** the structure of said device is such that the thickness of said tubular layer of said flow of product can form freely until said flow leaves said moistening area (Z), said layer thereafter retaining its hollow annular shape.

2. A dust-laying device according to claim 1, **characterized in that** it comprises an outside casing (1) coaxially surrounding said divergent cone (18) and said moistening area (Z), and **in that** the shape of said casing is such that said layer is separated therefrom at least until said flow of product leaves said area (Z).

3. A dust-laying device according to claim 1 or 2, **characterized in that** it comprises a plurality of spray nozzles (17) mounted at the periphery of said casing (1) so as to be able to moisten the outside of said layer of product.

4. A dust-laying device according to anyone of preceding claims, **characterized in that** it also comprises means (11b, 10, 15) for feeding air to the inside of said tubular layer of product in said moistening area (Z) downstream of said divergent cone (18).

5. A dust-laying device according to claim 4, **characterized in that** said air is drawn in as the result of the natural pressure drop created at said divergent cone (18) by said flow of said bulk product.

6. A dust-laying device according to claim 4, **characterized in that** it comprises means for injecting said air under pressure into said moistening area (Z).

7. A dust-laying device according to anyone of claims 2 to 6, **characterized in that** said casing (1) has, relative to the direction of flow of said product, a first part (2, 4) which is at least partly divergent with a taper similar to that of said divergent cone (18) and is connected to said feed pipe (3), said divergent cone (18) being mounted in said first part (2, 4) of said casing (1).

8. A dust-laying device according to anyone of claims 2 to 6, **characterized in that** said casing (1) has, relative to the direction of flow of said product, a convergent frustoconical outlet part (5).

9. A dust-laying device according to anyone of claims 2 to 8, **characterized in that** it also comprises an entry cone (8) fastened to said casing (1) and placed at the outlet of said feed pipe (3) upstream of said divergent cone (18), said entry cone (8) having a taper opposite that of said divergent cone (18).

10. A dust-laying device according to claim 9, **characterized in that** it comprises means (12, 13) for adjusting the relative axial position of said divergent cone (18) and said entry cone (8) to adjust the thickness of said tubular layer of product.

11. A dust-laying device according to anyone of claims 9 or 10, **characterized in that** said divergent cone (18) and/or said entry cone (8) have a circular, oval, star-shaped or polygonal, for example rectangular, cross section.

12. A dust-laying device according to anyone of claims 2 to 11, **characterized in that** said casing (1) has a circular, oval, star-shaped or polygonal, for example rectangular, cross section.

13. A dust-laying device according to anyone of the preceding claims, **characterized in that** said mounting device comprises a holding member (10, 12) having a central shaft (10) and a sleeve (12) mounted around said shaft (10) on which said divergent cone (18) is mounted.

14. A dust-laying device according to claim 13, **characterized in that** said central spray nozzle(s) (14) are mounted at a lower end of said shaft (10).

15. A dust-laying device according to claim 14, **characterized in that** a pipe (16) for said moistening liquid is provided in said holding member (10, 12) and communicates with said central spray nozzle(s) (14) and with a pressurized moistening liquid supply.

16. A dust-laying device according to claim 15, when it depends on claim 4, 5 or 6, **characterized in that** said sleeve (12) has air outlet orifices (15) in an area located inside said divergent cone (18), and the space delimited in said holding member around said pipe (16) communicates with an air supply.

17. A dust-laying device according to anyone of claims 12 to 15, **characterized in that** said holding member (10, 12) is fixed by means of hollow radial fins (9a) which are used to convey said moistening liquid.

18. A dust-laying device according to anyone of claims 12 to 16, when they depend on anyone of claims 4, 5 or 6, **characterized in that** said holding member (10, 12) is fixed by means of hollow radial fins (9a) which are used to convey air fed through the inside of said layer.

19. A dust-laying device according to anyone of preceding claims, **characterized in that** said moistening liquid is water to which a wetting agent has been added, preferably an agent of vegetable origin and of foodstuffs or foodstuffs-compatible grade.

20. A dust-laying device according to anyone of claims 1 to 18, **characterized in that** said moistening liquid is a food product extract, a foodstuffs-compatible mineral oil or a vegetable oil and in particular rapeseed oil.

21. Application of a dust-laying device according to anyone of preceding claims in a grain silo in which it is mounted above a cell of said silo.

22. The application claimed in claim 21 wherein said dust-laying device has the features recited in anyone of claims 4 to 20, **characterized in that** air aspirated or injected into said moistening area (Z) downstream of said divergent cone (18) comes from inside said silo.

23. Application of a dust-laying device according to anyone of claims 1 to 20, **characterized in that** it is mounted at the end of a product transfer pipe so that it can be used in a storage area or to fill a transport vehicle.
